# EUROPEAN PATENT APPLICATION

(11) **EP 2 605 143 A1**
(43) Date of publication of application: **19.06.2013**
(21) Application number: 10855906.3
(22) Date of filing: 13.08.2010
(51) Int. Cl.: G06F 12/06, G06F 12/00, G06F 12/16

(54) **MEMORY CONTROL DEVICE, INFORMATION PROCESSING DEVICE, AND CONTROL METHOD FOR A MEMORY CONTROL DEVICE**

(71) Applicant: Fujitsu Limited, Kawasaki-shi, Kanagawa 211-8588 (JP)
(72) Inventor: MURAKAMI, Hiroshi, Kawasaki-shi, Kanagawa 211-8588 (JP)
(74) Representative: HOFFMANN EITLE
(86) International application number: PCT/JP2010/063773
(87) International publication number: WO 2012/020505

(57) **Abstract**

When the number of memories in memory clusters (114 and 121) changes, firmware (203) decides an optimal interleaving setting on the basis of information on the aforementioned number of memories and data paths, compares interleaving settings in access control circuits (109 and 116) with the optimal interleaving setting, and identifies a channel having a different division number of data. An interleaving control circuit (105) changes a part of the interleaving settings in the access control circuits (109 and 116) by using a part of the optimal interleaving setting corresponding to the identified channel, and copies only data corresponding to the channel in the changed interleaving settings.

## Description

### FIELD

The present invention relates to a memory control device, an information processing device, and a control method for a memory control device.

### BACKGROUND

Conventionally, there are known a memory controller as a memory control device that controls plural redundant memories, and a server or the like as an information processing device having the redundant memories and the memory control device. Thereby, even when an error occurs in any of the memories, the server can perform processes continuously by using another memory that operates normally. Moreover, there is a server that performs memory access using a memory interleave function in order to perform the memory access at a higher speed. That is, when writing data into memories, the server divides data having continuous addresses and arranges the divided data on interleave blocks for each way that is a divided domain of the memories by writing the divided data into the interleave blocks alternately. Then, when reading out the written-in data, the server accelerates the memory access by alternately reading out the data having continuous addresses from the interleave blocks for each way. Here, interleave in the case where the memories are divided into two interleave blocks is called 2-way memory interleave, and interleave in the case where the memories are divided into four interleave blocks is called 4-way memory interleave.

However, when the server stores the data into the memories based on the setting of the 2-way memory interleave, and then changes the setting of the 2-way memory interleave to the setting of the 4-way memory interleave, a writing address is not identical with a reading address. Therefore, mismatching occurs between the data written in the memories, and the data read from the memories. Accordingly, a server which eliminates the mismatching between the data written in the memories and the data read from the memories without rebooting the server, i.e., a server which optimally changes an interleave setting of the redundant memories without rebooting the server is considered.

Hereinafter, a description will be given of a method that optimally changes the interleave setting of the redundant memories.

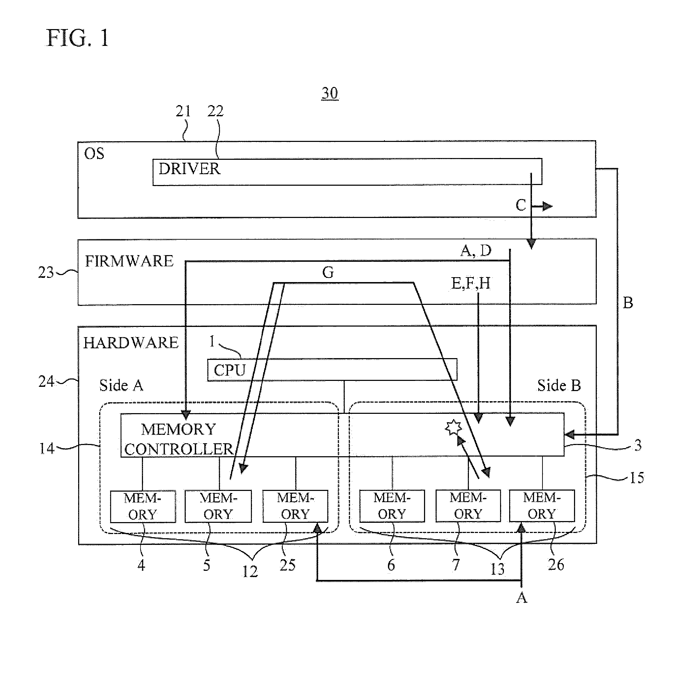

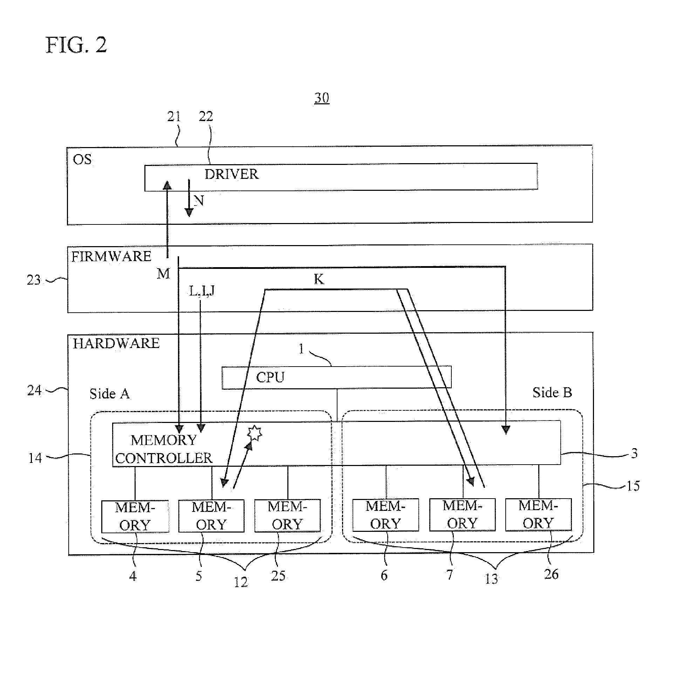

FIGs. 1 and 2 are schematic diagrams illustrating a method for changing the interleave setting in a server. In FIGs. 1 and 2, a server 30 includes an OS (Operating System) 21, a driver 22, firmware 23 and hardware 24. The hardware 204 includes a CPU (Central Processing Unit) 1, a memory controller 3, and memories 4 to 7, 25 and 26. The memories 4,5 and 25 constitute a memory cluster 12, and the memories 6, 7, and 27 constitute a memory cluster 13.

FIG. 1 illustrates a state before the interleave setting of a reduplicated memory circuit cluster B15 (Side B) is completed after the memory 25 is added to a memory circuit cluster A14 (Side A) of the server 30 and the memory 26 is added to the memory circuit cluster B 15 (Side B). FIG. 2 illustrates a state where the interleave of the duplicated memory circuit cluster A14 (Side A) is set. Here, a description will be given of the case where the interleave setting is changed from 2-way interleave setting to 3-way interleave setting by adding the memories 25 and 26 to the server 30. The n-way interleave setting indicates a setting for dividing the data having continuous addresses into n-pieces of data and writing the n-pieces of data into n-memories or reading out the data having continuous addresses from n-memories. The driver 22 is software which operates on the CPU 1. The firmware 23 is software which operates on the CPU 1. Therefore, the processing procedure of the driver 22 is achieved by the CPU 1 performing the driver 22. The processing procedure of the firmware 23 is achieved by the CPU 1 performing the firmware 23.

First, the memories 25 and 26 are added to the server 30. When the memory 25 is added to the memory circuit cluster A14 and the memory 26 is added to the memory circuit cluster B15, each of the firmware 23 and the memory controller 3 recognizes and initializes the added memories 25 and 26 (step A). The OS 21 recognizes the memories 25 and 26 as elements which constitute the hardware 24 by receiving information on the added memories 25 and 26 from the firmware 23 and the memory controller 3 (step B). In order to change the interleave setting of the memory circuit cluster A14 and the memory circuit cluster B 15, the driver 22 which operates on the CPU 1 stops transaction including the memory access or the like by the operative OS21, and notifies the firmware 23 that the transaction is stopped (step C). The driver 22 which operates on the CPU 1 sets the server 30 to a sleep mode and stops the transaction including the memory access by the OS 21.

The firmware 23 which operates on the CPU 1 stops matching check between the read-out data from the memories 4, 5 and 25, and the read-out data from the memories 6, 7 and 26 (step D). The firmware 23 prohibits the memory controller 3 to perform access in a read-out (Read) direction from the memory circuit cluster B 15 (step E). The firmware 23 performs the interleave setting on the memory circuit cluster B15 which has prohibited the read access (step F). Here, a description will be given of the case where the 2-way interleave setting is changed to 3-way interleave setting, for example. When the firmware 23 changes the interleave setting of the memory circuit cluster B15 from the 2-way interleave setting to the 3-way interleave setting, in the CPU 1, it seems that the address of the data to be data-accessed on the memory is changed. Therefore, when data is viewed from the OS 21, the firmware 23 and the driver 22, it seems that data stored into the address stored into the memory circuit cluster B15 after the change of the interleave setting is different from the data before the change of the interleave setting.

The firmware 23 which operates on the CPU1 copies the data stored into the memory circuit cluster A 14 to the memory circuit cluster B 15 that has changed from the 2-way interleave setting to the 3-way interleave setting (step G). If copying the data from the memory circuit cluster A14 to the memory circuit cluster B15 is completed, the firmware 23 cancels the read-out prohibition from the memory circuit cluster B 15 (step H). Next, the firmware 23 prohibits access in the read-out direction from the memory circuit cluster A14 which has not changed the interleave setting (step I). The firmware 23 changes the interleave setting of the memory circuit cluster A14 which has prohibited the read-out access from the 2-way interleave setting to the 3-way interleave setting (step J).

The firmware 23 which operates on the CPU1 copies the data stored into the memory circuit cluster B15 to the memory circuit cluster A14 (step K). If copying the data from the memory circuit cluster B15 to the memory circuit cluster A14 is completed, the firmware 23 cancels the read-out prohibition from the memory circuit cluster A14 (step L). The firmware 23 resumes the matching check of the read-out data between the memories 4, 5 and 25 and the memories 6, 7 and 26 which have been duplicated to the memory controller 3 (step M). The firmware 23 notifies the driver 22 that a process for changing the interleave setting has been completed, and the driver 22 requires resumption of the transaction including the memory access by the OS 21 (step N).

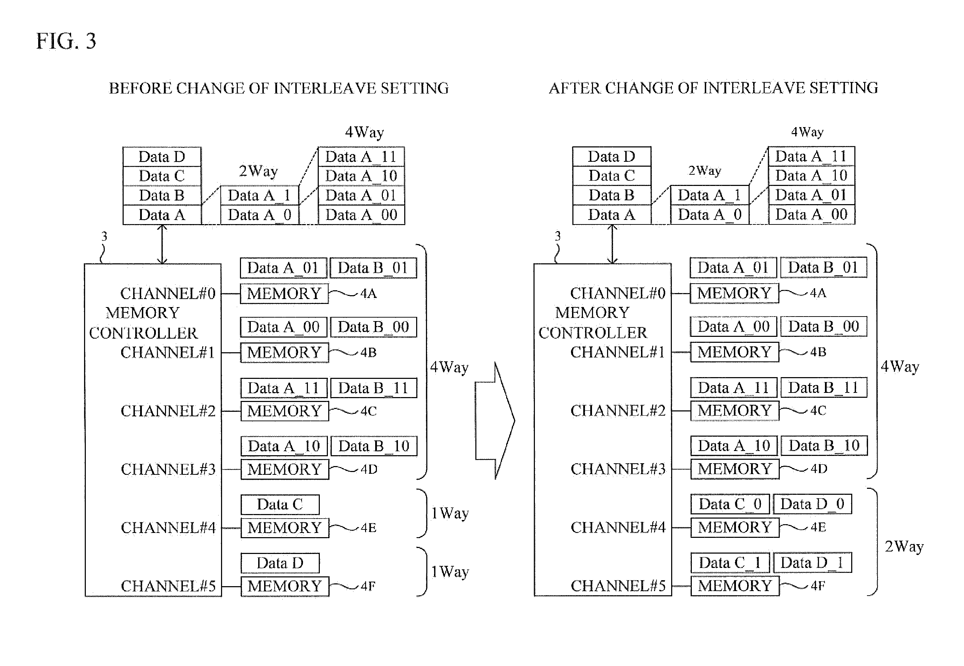

Next, a description will be given of states of data before and after the change of the interleave setting in the case of addition of a memory using Fig. 3.

For example, it is assumed that data A to D are stored into six memories 4A to 4F, as illustrated in FIG. 3. The memory controller 3 has six channels #0 to #5 which access the memories 4A to 4F. When the 2-way interleave setting is set, as illustrated in FIG. 3, the data A is divided into "data A_0" and "data A_1". When the 4-way interleave setting is set, the data A is divided into "data A_00", "data A_01", "data A_10" and "data A_11". Each data B to D as well as the data A is also divided according to the interleave setting.

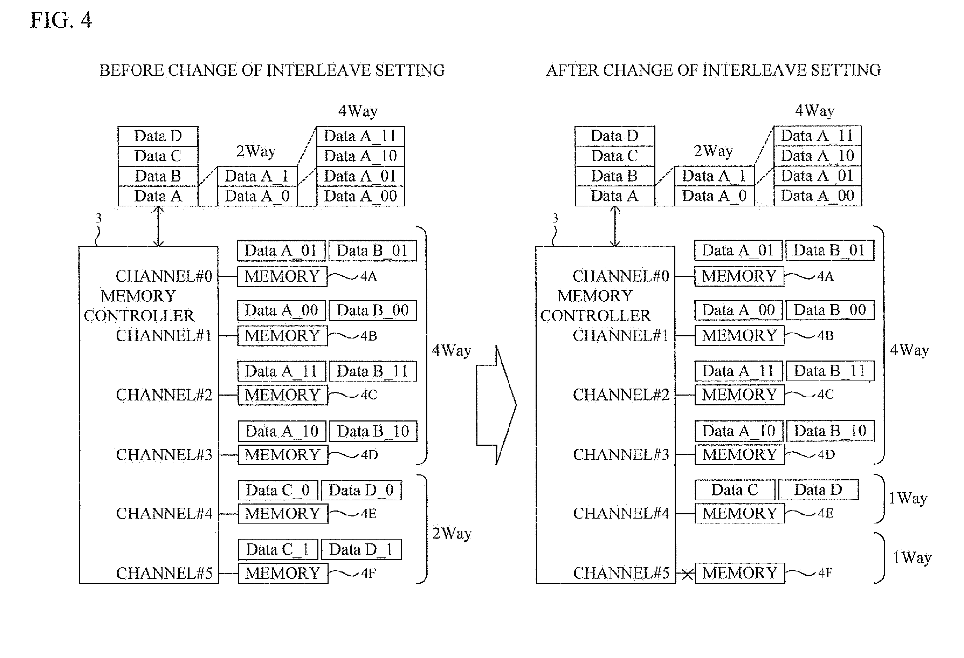

It is assumed that, before the change of the interleave setting in the case of addition of the memory 4F, the firmware 23 sets the interleave setting of the memory circuit cluster A14 to the 4-way interleave setting and two 1-way interleave settings. In this case, each of the data A and B which is an object of the 4-way interleave setting is divided, and the plural pieces of divided data are stored into the memories 4A to 4D. The data C which is an object of the 1-way interleave setting is stored into the memory 4E, and the data D which is an object of the 1-way interleave setting is stored into the memory 4F. Next, when the firmware 23 changes the interleave setting of the memory circuit cluster A14 to the 4-way interleave setting and the 2-way interleave setting, each of the data A and B which is the object of the 4-way interleave setting is divided, and the plural pieces of divided data are stored into the memories 4A to 4D. Each of the data C and D which is the object of the 2-way interleave setting is divided. That is, "data C_0" and "data D_0" are stored in the memory 4E, and "data C_1" and "data D_1" are stored in the memory 4F. In a state after the change of the interleave setting in the case of addition of the memory 4F, only a method for accessing the data C and D is changed, as compared with a state before the change of the interleave setting. FIG. 4 illustrates the states of the data before and after the change of the memory interleave setting in the case of reduction of the number of memory modules. In a state after the change of the interleave setting in the case of reduction of the memory 4F, only the method for accessing the data C and D is changed, as compared with a state before the change of the interleave setting.

### PRIOR ART DOCUMENT

### PATENT DOCUMENT

Patent Document 1: Japanese National Publication of International Patent Application No. 2006-505864
Patent Document 2: Japanese Laid-open Patent Publication No. 2008-217727

### DISCLOSURE OF THE INVENTION

### PROBLEMS TO BE SOLVED BY THE INVENTION

By the way, in order to copy data from a memory cluster 12 to a memory cluster 13, the above-mentioned server 30 uses the firmware 23 which the CPU 1 performs. The data passes through a long path like the memory cluster 12, the memory controller 3, the CPU 1, the memory controller 3 and the memory cluster 13 in turn. Therefore, there is a problem that it takes time to copy the data, and the stop time of the transaction including the memory access by the OS to change the interleave setting, i.e., the stop time of the server 30 becomes long.

Moreover, a channel required for the copy of the data is only a channel in which the interleave setting has been changed, as illustrated in FIGs. 3 and 4. However, the above-mentioned server 30 performs the copy of all data. Therefore, there is a problem that it takes time to copy the data, and the stop time of the transaction including the memory access by the OS to change the interleave setting, i.e., the stop time of the server 30 becomes long.

In view of the above described problem, it is an object to provide a memory control device, an information processing device, and a control method for a memory control device that reduces stop time of the information processing device for changing an interleave setting.

### MEANS FOR SOLVING THE PROBLEMS

In order to achieve the above-mentioned object, a memory control device described herein connected to a first memory cluster that divides data and stores the divided data into a plurality of first memories, and a second memory cluster that divides the data and redundantly stores the divided data into a plurality of second memories, the memory control device includes: a first control circuit that has a plurality of channels connected to the plurality of first memories, and accesses the first memory cluster based on a first interleave setting for dividing data, and reading and writing the divided data from/into memories of a number corresponding to the division number of data; a second control circuit that has a plurality of channels connected to the plurality of second memories, and accesses the second memory cluster based on a second interleave setting for dividing data, and reading and writing the divided data from/into memories of a number corresponding to the division number of data; a decision means configured to, when the number of memories included in the first memory cluster and the second memory cluster is changed, decide a third interleave setting based on the number of memories after the changing; an identifying means configured to compare the first and the second interleave settings with the third interleave setting, and identify a channel having a different division number of data; a changing means configured to change the first and the second interleave settings by using a part of the third interleave setting corresponding to the identified channel; and a copy means configured to copy data in the memory corresponding to a channel related to the change of the first interleave setting to the memory corresponding to a channel related to the change of the second interleave setting, and copy data in the memory corresponding to a channel related to the change of the second interleave setting to the memory corresponding to a channel related to the change of the first interleave setting.

An information processing device described herein includes: a first memory cluster that divides data and stores the divided data into a plurality of first memories; a second memory cluster that divides the data and redundantly stores the divided data into a plurality of second memories; a memory control device connected to the first and the second memory clusters; and an arithmetic processing device that reads and writes data from/into the first and the second memory clusters via the memory control device; the arithmetic processing device including: a first control circuit that has a plurality of channels connected to the plurality of first memories, and accesses the first memory cluster based on a first interleave setting for dividing data, and reading and writing the divided data from/into memories of a number corresponding to the division number of data; a second control circuit that has a plurality of channels connected to the plurality of second memories, and accesses the second memory cluster based on a second interleave setting for dividing data, and reading and writing the divided data from/into memories of a number corresponding to the division number of data; a decision means configured to, when the number of memories included in the first memory cluster and the second memory cluster is changed, decide a third interleave setting based on the number of memories after the changing; an identifying means configured to compare the first and the second interleave settings with the third interleave setting, and identify a channel having a different division number of data; a changing means configured to change the first and the second interleave settings by using a part of the third interleave setting corresponding to the identified channel; and a copy means configured to copy data in the memory corresponding to a channel related to the change of the first interleave setting to the memory corresponding to a channel related to the change of the second interleave setting, and copy data in the memory corresponding to a channel related to the change of the second interleave setting to the memory corresponding to a channel related to the change of the first interleave setting.

A control method for a memory control device described herein, connected to a first memory cluster that divides data and stores the divided data into a plurality of first memories, and a second memory cluster that divides the data and redundantly stores the divided data into a plurality of second memories, the control method includes: deciding, when the number of memories included in the first memory cluster and the second memory cluster is changed, a third interleave setting for dividing data, and reading and writing the divided data from/into memories of a number corresponding to the division number of data, based on information on the number of memories and data paths; comparing a first interleave setting in a first control circuit included in the memory control device and a second interleave setting in a second control circuit included in the memory control device with the third interleave setting, and identifying a channel having a different division number of data, from among the plurality of channels included in each of the first control circuit and the second control circuit; changing the first and the second interleave settings by using a part of the third interleave setting corresponding to the identified channel; and copying data in the memory corresponding to a channel related to the change of the first interleave setting to the memory corresponding to a channel related to the change of the second interleave setting, and copying data in the memory corresponding to a channel related to the change of the second interleave setting to the memory corresponding to a channel related to the change of the first interleave setting.

### EFFECTS OF THE INVENTION

A memory control device, an information processing device, and a control method for a memory control device described herein can reduce stop time of the information processing device for changing an interleave setting.

### BRIEF DESCRIPTION OF DRAWINGS

FIG. 1 is a schematic diagram illustrating a method that changes an interleave setting of a server;
FIG. 2 is a schematic diagram illustrating the method that changes the interleave setting of the server:
FIG. 3 is a diagram illustrating the states of data before and after the change of the interleave setting in the case of addition of a memory;
FIG. 4 is a diagram illustrating the states of data before and after the change of the interleave setting in the case ofreduction of a memory;
FIG. 5 is a block diagram illustrating hardware configuration of a server 100 according to the present embodiment;
FIG. 6 is a schematic diagram illustrating a changing process of the interleave setting of the server 100;
FIG. 7 is a schematic diagram illustrating the changing process of the interleave setting of the server 100; and
FIG. 8 is a flowchart illustrating the changing process of the interleave setting of the server 100.

### DESCRIPTION OF EMBODIMENTS

A description will be given of embodiments of the invention, with reference to drawings.

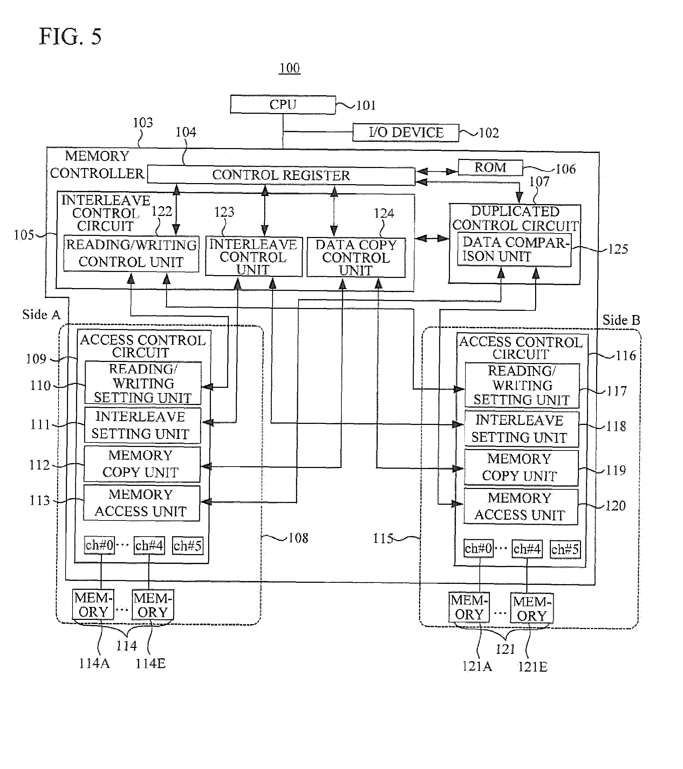

In the present embodiment, a description will be given of the change of the interleave setting in a server 100 illustrated in FIG. 5. It is assumed that the server 100 can optimally change an interleave setting accompanying the addition or reduction of a memory without rebooting. The interleave setting is a setting for dividing data having continuous addresses, and reading and writing the divided data from/into memories of a number corresponding to the number of pieces of divided data. Hereinafter, a description will be given of the operation of the server 100 using FIG. 5.

FIG. 5 is a block diagram illustrating hardware configuration of the server according to the present embodiment.

The server 100 is composed of a CPU (Central Processing Unit) 101, an I/O (Input/Output) device 102, a memory controller 103, a control register 104, an interleave control circuit 105, a duplicated control circuit 107, access control circuits 109 and 116 (a first control circuit and a second circuit), and memories 114 A to 114E and 121A to 121E. The memories 114A to 114E form a memory cluster A114 (i.e., a first memory cluster), and the memories 121A to 121E form a memory cluster B121 (i.e., a second memory cluster). Moreover, the access control circuit 109 and the memory cluster A114 form a storage circuit cluster A108 (Side A), and the access control circuit 116 and the memory cluster B115 form a storage circuit cluster B115 (Side B). The memory circuit cluster A108 and the memory circuit cluster B115 have mirroring configuration (i.e., duplication configuration). That is, the server 100 includes the redundant memory cluster A114 and the redundant memory cluster B121

Here, in order to achieve high reliability, the memory cluster A114 and the memory cluster B121 are duplicated in the server 100. When a memory is newly added to or reduced from one memory cluster, another memory is also symmetrically added or reduced to/from another memory cluster so that duplication may be maintained. In the server 100, a memory can be added or reduced during partition operation.

Then, the server 100 stores the data having continuous addresses into the memory cluster A114 by write-in control which uses the memory interleave. Similarly, the server 100 redundantly stores the same data having continuous addresses into the memory cluster B121 by write-in control which uses the memory interleave. Specifically, the access control circuit 109 performs the data access by writing the data having continuous addresses into the memories 114A to 114E using interleave control, or reading out the data having continuous addresses using the interleave control. Here, memory interleave is that the memory controller 103 divides the data having continuous addresses into every way that is a constant division unit, and writes the divided data into the way or reads out the divided data from the way. That is to say, the continuous memory addresses are assigned to the memories 114A to 114F. Then, the memory controller 103 performs the data access to the continuous addresses across a boundary between the memories 114A and 114B, a boundary between the memories 114B and 114C, a boundary between the memories 114C and 114D, and a boundary between the memories 114D and 114E. Similarly, the access control circuit 116 performs the data access by writing the data having continuous addresses into the memories 121A to 121E using the interleave control, or reading out the data having continuous addresses using the interleave control. That is, the continuous memory addresses are assigned to the memories 121A to 121F. The memory controller 103 performs the data access to the continuous addresses across a boundary between the memories 121A and 121B, a boundary between the memories 121B and 121C, a boundary between the memories 121C and 121D, and a boundary between the memories 121D and 121E. In the present embodiment, the memory cluster A114 and the memory cluster B121 are duplicated by mirroring, and the same data is stored into a set of the memories 114A and 121A. Similarly, a plurality of pieces of other same data are stored into a set of the memories 114B and 121B, a set of the memories 114C and 121C, a set of the memories 114D and 121D, and a set of the memories 114E and 121E, respectively.

Hereinafter, a description will be given of the operation and the function of each unit which the server 100 includes, and a description will be given of reconfiguration procedures of the memory interleave which the server 100 performs.

Hereinafter, a description will be given of the CPU 101. The CPU 101 as an arithmetic processing device performs an arithmetic process in the server 100. The operation which the server 100 performs is to read out data from the memory or write data into the memory, depending on a command included in a program performed by the CPU 101, a request from a client device connected to the server 100, and so on. The server 100 performs data communication with an external device such as the client device via the I/O device 102 such as a network controller. Then, the CPU 101 accesses any of the memories 114A to 114E and 121A to 121E via the memory controller 103. At this time, the memory controller 103 reads out data from any of the memories 114A to 114E and 121A to 121E, or writes data into any of the memories 114A to 114E and 121A to 121E.

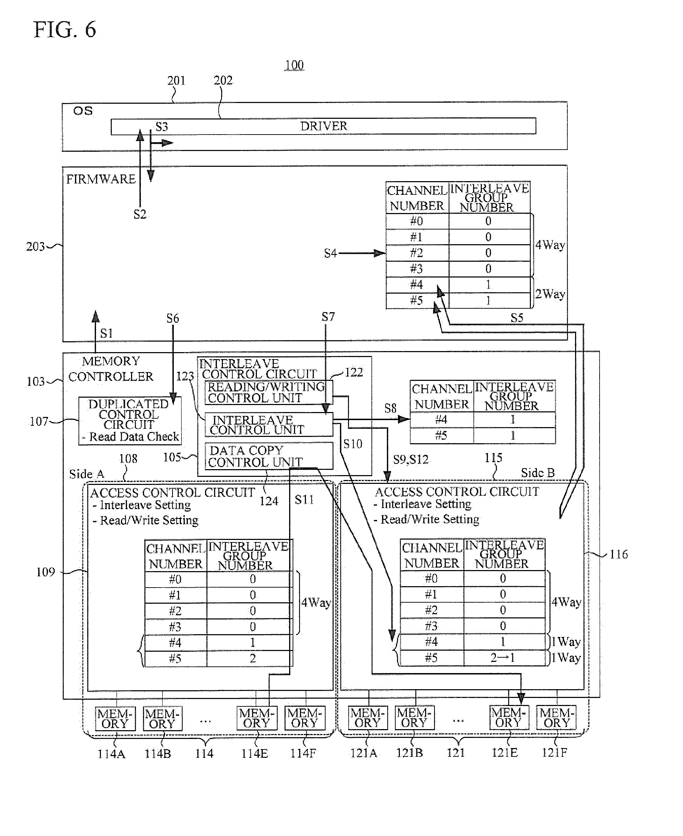

When the CPU 101 changes the interleave setting, the CPU 101 controls the memory controller 103 so as to stop a data process using the memories 114A to 114E and 121A to 121E. Specifically, the CPU 101 sets a sleep mode to the server 100, and stops transaction such as the memory access by an OS (Operating System) 201 illustrated in FIG. 6. As seen from an aspect of software performed on the server 100, a driver 202 illustrated in FIG. 6 is software having a function stopping the transaction by the OS 201, and the driver 202 stops the transaction by the OS 201. Here, the transaction is a process which has gathered some sessions to be performed by the server 100. The session is a unit of the inquiry and the response to the inquiry in a database management system published when a database or the like is updated by a demand from the above-mentioned client device in the server 100. The driver 202 is incorporated into the OS 201.

When the CPU 101 has changed the interleave setting of the memories from the 1-way interleave setting to the 2-way interleave setting, for example, the CPU 101 resumes the data process using the memories 114E and 121E relating to the change of the interleave setting and the newly added memories 114F and 121F.

Next, a description will be given of the memory controller 103. The memory controller 103 includes the control register 104, the interleave control circuit 105, a ROM (Read Only Memory) 106, the duplicated control circuit 107, the access control circuits 109 and 116. The interleave control circuit 105 includes a reading/writing control unit 122 (i.e., a read-out control means), an interleave control unit 123 (i.e., a changing means), and a data copy control unit 124 (i.e., a copy means). The duplicated control circuit 107 includes a data comparison unit 125. The access control circuit 109 includes a reading/writing setting unit 110, an interleave setting unit 111, a memory copy unit 112 and a memory access unit 113. The access control circuit 116 includes a reading/writing setting unit 117, an interleave setting unit 118, a memory copy unit 119 and a memory access unit 120. The access control circuit 109 includes channels #0 to #5 for accessing the memory cluster A114. Similarly, the access control circuit 116 includes channels #0 to #5 for accessing the memory cluster B121. Here, the "channels #0 to #5" for accessing the memory cluster A114 with which the access control circuit 109 is equipped, and the "channel #0 to #5" for accessing the memory cluster B121 with which the access control circuit 116 is equipped have the same name, but their settings of interleave group numbers are different from each other. The interleave group number is described later.

Setting information required for the memory controller 103 to perform processes is stored into the control register 104. The interleave control circuit 105, the duplicated control circuit 107, and the access control circuits 109 and 116 perform the processes based on the setting information, respectively.

The reading/writing control unit 122 in the interleave control circuit 105 controls the reading/writing of respective data in the reading/writing setting units 110 and 117. For example, the reading/writing control unit 122 prohibits the reading/writing setting unit 110 from performing the memory access in a read-out direction from the memory circuit cluster A108. In this case, the access in the read-out direction from the memory cluster A114 is prohibited in the access control circuit 109. Similarly, the reading/writing control unit 122 prohibits the reading/writing setting unit 117 from performing the memory access in a read-out direction from the memory circuit cluster B115. In this case, the access in the read-out direction from the memory cluster B121 is prohibited in the access control circuit 116.

The interleave control unit 123 in the interleave control circuit 105 sets the memory interleave for each of the memory circuit cluster A108 and the memory circuit cluster B115 which are duplicated, i.e., for each Side. Specifically, the interleave control unit 123 can change the interleave setting in units of the channel, by performing the interleave setting in units of the channel in the access control circuits 109 and 116. The interleave settings in units of the channel in the access control circuits 109 and 116 are stored into the interleave setting units 111 and 118, respectively.

The data copy control unit 124 in the interleave control circuit 105 controls the copy of data performed in units of the memory circuit cluster (Side) or in units of the channel. For example, when the data stored into the memory 114A is copied to the memory 121A, the data copy control unit 124 controls the memory copy unit 112 so as to read out the data stored into the memory 114A, and controls the memory copy unit 119 so as to write the read-out data into the memory 121A.

Thus, the interleave control circuit 105 includes: 1) a function that controls the interleave setting in units of the Side or the channel; 2) a function that sets reading/writing of data in the access control circuits 109 and 116 in units of the Side; and 3) a function that copies data in units of the Side or the channel.

The data comparison unit 125 in the duplicated control circuit 107 checks whether the data which the memory access units 113 and 120 have read out from the duplicated memory clusters A114 and B121, respectively, are identical with each other. The duplicated control circuit 107 stops and resumes the check function of the data comparison unit 125. The duplicated control circuit 107 performs control which maintains a duplication state of the memory circuit clusters A108 and B115. The duplication control which the duplicated control circuit 107 performs is control that always makes the data stored into the memory clusters A114 and B121 identical with each other, and is control to write the same data in the memory cluster B121 using the interleave control at the same time when the data is written in the memory cluster A114 using the interleave control.

The access control circuit 109 in the memory circuit cluster A108 controls access to the data which the memories 114A to 114E store. Specifically, setting information for the reading/writing is stored into the reading/writing setting unit 110 in the access control circuit 109. Setting information of the memory interleave is stored into the interleave setting unit 111 in the access control circuit 109. The memory copy unit 112 in the access control circuit 109 reads out the data from the memories 114A to 114E, outputs the data to the memories 121A to 121E via the data copy control unit 124, or copies the data in the memories 121A to 121E to the memories 114A to 114E. The memory access unit 113 in the access control circuit 109 reads out the data from the memories 114A to 114E, and outputs the read-out data to the data comparison unit 125.

The access control circuit 116 in the memory circuit cluster B 115 controls access to the data in the memories 121A to 121E. Specifically, setting information for the reading/writing is stored into the reading/writing setting unit 117 in the access control circuit 116. Setting information of the memory interleave is stored into the interleave setting unit 118 in the access control circuit 116. The memory copy unit 119 in the access control circuit 116 reads out the data from the memories 121A to 121E, outputs the data to the memories 114A to 114E via the data copy control unit 124, or copies the data in the memories 114A to 114E to the memories 121A to 121E. The memory access unit 120 in the access control circuit 116 reads out the data from the memories 121A to 121E, and outputs the read-out data to the data comparison unit 125.

FIG. 6 is a schematic diagram illustrating a relationship between an OS201 a driver 202, and firmware 203 which operate on the server 100, and the memory controller 103 included in the server 100.

The firmware 203 (a decision means, and an identifying means) illustrated in FIG. 6 is stored into the ROM 106 incorporated into the server 100 illustrated in FIG. 5. The firmware 203 is software incorporated into the server 100 to perform basic control of a booting process, a termination process and so on of the hardware, and is the software which the CPU 101 connected to the memory controller 103 performs. That is, the process of the firmware 203 is achieved by being performed by the CPU 101 connected to the memory controller 103.

The firmware 203 which operates on the CPU 101 performs the interleave setting of the memory controller 103, a copying process of the data performed on the occasion of the resetting of the interleave (i.e., writing process of the data into the respective memories 114A to 114E and 121A to 121E), a process which notifies the driver 202 that the copying process has been completed, and so on. Moreover, the firmware 203 compares an optimal interleave setting in the mounted memory configuration (i.e., a third interleave setting) with a current interleave setting set to the access control circuit 109 or 116 (i.e., first and second interleave settings), and performs a process that identifies a channel that differs in the division number of data (Way number). Further, the firmware 203 performs a process which sets the optimal interleave setting to the interleave control circuit 105 in units of the Side or the channel.

Here, a description will be given of the optimal interleave setting in the mounted memory configuration. Each of the firmware 203 and the access control circuits 109 and 116 includes data indicative of a relationship between a channel number and an interleave group number, as the interleave setting, as illustrated in FIG. 6. The channel number is a number for identifying each channel. The interleave group number is a number for identifying whether each channel belongs to a group of continuous data or belongs to a group of different data. In the 4-way interleave setting, the data having the continuous addresses is divided into four, and the respective divided data are written into four memories via the channels corresponding to the channel numbers "#0" to "#3", for example. Therefore, the channel numbers "#0" to "#3" belong to the group of the continuous data. Accordingly, a common interleave group number "0" is assigned to the channel numbers "#0" to "#3". Since the channel of the channel number "4" is not used for the 4-way interleave setting, the channel of the channel number "4" belongs to the group of different data from the channels of the channel numbers "#0" to #3. The different interleave group number "1" from "0" is assigned to the channel number #4. Since the interleave setting is the data indicative of the relationship between the channel number and the interleave group number, the firmware 203 easily identifies the channel having a different division number of data, when comparing two or more interleave settings.

The firmware 203 which operates on the CPU 101 decides the optimal interleave setting by deciding the division number of data (i.e., Way number) based on information on the memories mounted on the server 100 (specifically, information on the number of memories included in one memory cluster), and data paths. For example, the division number of data (i.e., Way number) is 2 to the n-th power (i.e., "n" is an integer greater than or equal to 0), such as 1, 2, 4, 8, 16, and so on. From a viewpoint of speeding up of the memory access, the firmware 203 sets the division number of data to a combination of 2 to the n-th power and a maximum value of a range that does not exceed the number of memories included in one memory cluster, for example. Since the division number of data is set to the combination of 2 to the n-th power and the maximum value of the range that does not exceed the number of memories included in one memory cluster, for example, when the number of memories included in the memory cluster A 114 is 5, the firmware 203 decides the number of memories as "4" and "1". Then, when the number of memories included in the memory cluster A 114 increases by 1 and is 6, the candidate of the division number of data becomes a combination of "4", "1" and "1", or "4" and "2". Even when the number of memories is 5 or 6, the paths of the data divided into 4 are not changed. Therefore, when the number of memories is 6, the firmware 203 sets the division number of data to be stored into two remaining memories to the combination of 2 to the n-th power and the maximum value of the range that does not exceed the number of memories. That is, the firmware 203 decides the number of memories as "4" and "2". Thereby, the optimal interleave setting becomes a combination of the 4-way interleave setting and the 2-way interleave setting. Here, the description has been given of an example in which the optimal division number of data is set to 2 to the n-th power (i.e., "n" is an integer greater than or equal to 0) and the maximum value of the range that does not exceed the number of memories. However, the optimal division number of data may be set to a combination of "m" to the n-th power (i.e., "m" and "n" are integers greater than or equal to 0) and the maximum value of the range that does not exceed the number of memories.

When memories 114F and 121F are newly added to the memory cluster A114 and the memory cluster B 121 of the server 100, respectively, the memory controller 103 alternately changes the interleave settings of the memory circuit cluster A108 and the memory circuit cluster B 115 in a state where the CPU 101 has stopped the transaction including the memory access by the OS 201. More specifically, when the memories 114F and 121F are newly added to the memory cluster A114 and the memory cluster B121 of the server 100, respectively, the firmware 203 decides the optimal interleave setting in the added memory configuration, compares the current interleave setting set to the access control circuit 116 with the optimal interleave setting, and identifies the channel having the different division number of data. Then, the interleave control circuit 115 changes the interleave setting in the access control circuit 116 corresponding to the identified channel, and copies the data in the memory cluster A114 corresponding to the identified channel to the memory cluster B121 corresponding to the identified channel by using a new interleave setting. For example, the interleave control circuit 115 copies the data in the memories 114E and 114F corresponding to the channels #4 and #5 of the two 1-way interleave settings to the memories 121E and 121F by using the 2-way interleave setting. Moreover, the interleave control circuit 115 changes the interleave setting in the access control circuit 109 corresponding to the identified channel, and copies the data in the memory cluster B121 corresponding to the identified channel to the memory cluster A114 corresponding to the identified channel by using a new interleave setting. For example, the interleave control circuit 115 copies the data in the memories 121E and 121F corresponding to the channels #4 and #5 to the memories 114E and 114F by using the 2-way interleave setting. Thus, the interleave control circuit 115 performs resetting of the memory interleave in the server 100 by changing in order the interleave settings of the access control circuits 116 and 109 corresponding to the channel having the different division number of data, and copying the data in the memory corresponding to the channel having the different division number of data, by using the new interleave setting. Therefore, only the data of the channels relating to the interleave setting changed according to the change of the number of memories is copied. The resetting of the memory interleave according to the change of the number of memories is to divide the data according to the number of increased memories when the number of memories is increased, and to store the divided data into the memories by using the new interleave setting, or to divide the data according to the number of decreased memories when the number of memories is decreased, and to store the divided data into the memories by using the new interleave setting.

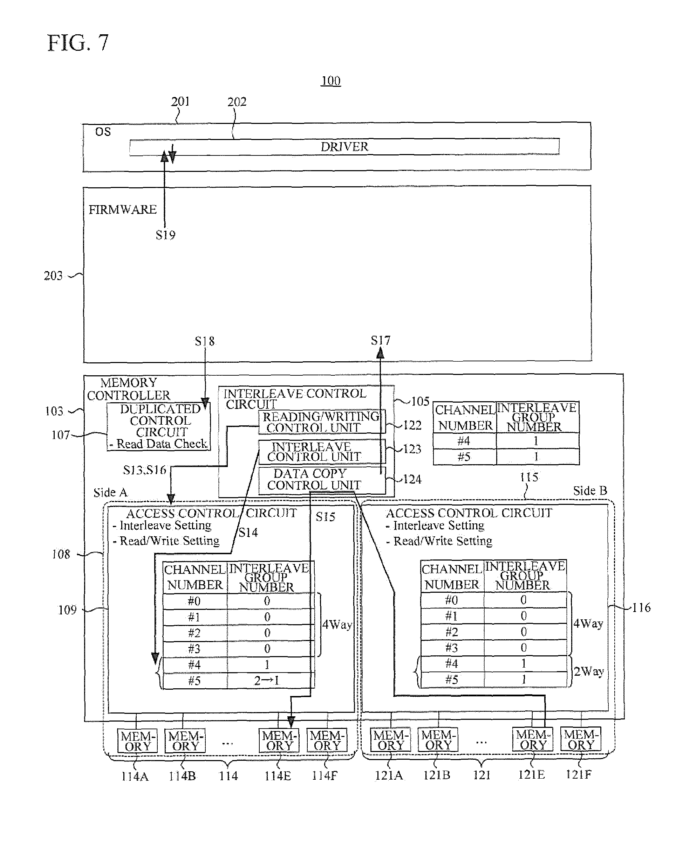

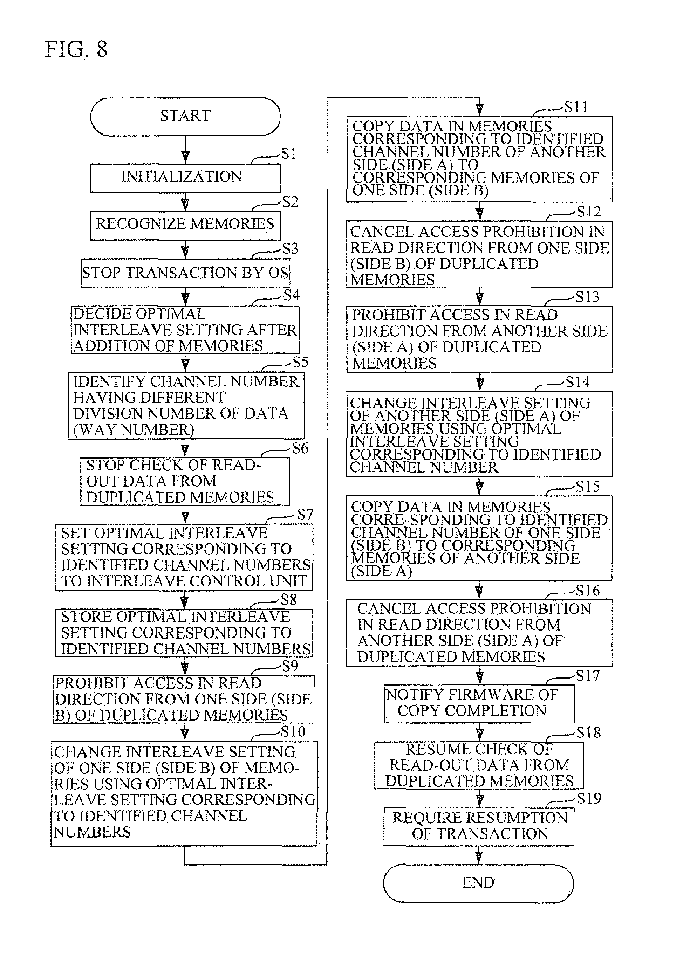

Hereinafter, a description will be given of a change process of the interleave setting, with respect to FIGs. 6 to 8. FIGS. 6 and 7 are schematic diagrams illustrating the changing process of the interleave setting of the server 100. FIG. 8 is a flowchart illustrating the changing process of the interleave setting of the server 100.

FIG. 6 illustrates a state before the change of the interleave setting in the access control circuit 116 and copying the data from the memory circuit cluster A108 to the memory circuit cluster B115 are completed after the memories 114F and 121 F are added to the server 100. Then, FIG. 7 illustrates a state before the change of the interleave setting in the access control circuit 109 and copying the data from the memory circuit cluster B 115 to the memory circuit cluster A108 are completed. In the present embodiment, a description will be given of a case where the two 1-way interleave settings corresponding to the channels #4 and #5 are changed to the 2-way interleave setting by adding the memories 114F and 121F to the server 100. The n-way interleave setting is to divide the data having continuous addresses into n and write the divided data into n memories or read the divided data from n memories. Also, the driver 202 is the software which operates on the CPU 101 and the firmware 203 is the software which operates on the CPU 101, as described above. Therefore, the processing procedure of the driver 202 described hereinafter is achieved by the CPU 101 performing the driver 202. The processing procedure of the firmware 203 is achieved by the CPU 101 performing the firmware 203.

First, the memories 114F and 121F are added to the server. When the memories 114F and 121F are added to the memory circuit cluster A108 and the memory circuit cluster B115, respectively, the firmware 203 and the memory controller 103 recognize and initialize the added memories 114F and 121F (step S1). The OS 201 recognizes the memories 114F and 121F as hardware configuration by receiving information on the added memories 114F and 121F from each of the firmware 203 and the memory controller 103 (step S2).

In order to change the interleave settings in the access control circuits 109 and 116, the driver 202 stops the transaction including the memory access by the operating OS 201, and notifies the firmware 203 of the stop of the transaction (step S3). The driver 202 sets the server 100 to the sleep mode, and stops the transaction including the memory access by the OS 201. As the operation of the hardware, the CPU 101 stops the transaction by the OS 201. That is, the CPU 101 stops the transaction by the OS 201, so that the data stored into the memory circuit cluster A108 and the memory circuit cluster B115 is determined and the interleave control circuit 105 of the memory controller 103 changes the interleave settings in the access control circuits 109 and 116. In order to determine data to be stored into the memory circuit cluster A108 and the memory circuit cluster B115, the CPU 101 stops a data process using the memory circuit cluster A 108 and the memory circuit cluster B115.

The firmware 203 which operates on the CPU 101 decides the optimal interleave setting after the addition of the memories (step S4). Specifically, the firmware 203 decides the optimal interleave setting by deciding the division number of data having continuous addresses based on information on the mounted memories (specifically, information on the number of memories included in one memory cluster), and the data paths. Since the division number of data is the combination of "m" to the n-th power (i.e., "m" and "n" are integers greater than or equal to 0), the optimal interleave setting becomes the combination of the 4-way interleave setting and the 2-way interleave setting in the state where 6 memories are mounted in each of the memory circuit cluster A108 and the memory circuit cluster B115. In FIG. 6, the optimal interleave setting is data that indicates the relationship between the channel number and the interleave group number, and is included in the firmware 203. The firmware 203 compares the decided optimal interleave setting with the current interleave setting in the access control circuit 116, and identifies the channel number having the different division number of data (step S5). In FIG. 6, the channel numbers corresponding to the channels having the different division number of data are "#4" and "#5".

The firmware 203 stops the matching check of the read-out data from the memory cluster A114 and the memory cluster B121 (step S6). When reading out the data from any one of the memory clusters is prohibited in a state where the memory cluster A 114 and the memory cluster B121 are duplicated, the read-out data from the duplicated memory cluster A114 differs from that from the duplicated memory cluster B121. In order that the duplicated control circuit 107 may not detect this state as a hardware failure, the firmware 203 restrains the matching check of the read-out data from the memory cluster A114 and the memory cluster B121 by the duplicated control circuit 107.

The firmware 203 sets the optimal interleave setting corresponding to the channel numbers identified in step S5, to the interleave control unit 123 in the interleave control circuit 105 (step S7). The interleave control unit 123 in the interleave control circuit 105 stores the optimal interleave setting corresponding to the channel numbers received from the firmware 203 (step S8). In FIG. 6, the optimal interleave setting corresponding to the channel numbers received from the firmware 203 or the channel numbers identified by the firmware 203 is the data indicative of a relationship between the channel numbers "#4" and "#5" and the interleave group number "1".

The reading/writing control unit 122 in the interleave control circuit 105 prohibits the access control circuit 116 from performing the access in the read-out (Read) direction from the memory circuit cluster B115 (step S9). When the interleave setting in the access control circuit 116 is changed after data has been arranged at the memory cluster 121 in the memory circuit cluster B115, the mismatching occurs between the written-in data and the read-out data. The reading/writing control unit 122 prohibits the access control circuit 116 from reading out the data, so that the reading/writing control unit 122 prevents the access control circuit 116 from using the data which has caused the mismatching. Here, the interleave control circuit 105 prohibits the access control circuit 116 from performing the access in the read-out direction from the memory circuit cluster B115, and then prohibits the access control circuit 109 from performing the access in the read-out direction from the memory circuit cluster A108. The order of prohibition of the access is an example. The interleave control circuit 105 may prohibit the access control circuit 109 from performing the access in the read-out direction from the memory circuit cluster A108, and then may prohibit the access control circuit 116 from performing the access in the read-out direction from the memory circuit cluster B115.

The interleave control unit 123 in the interleave control circuit 105 changes the interleave setting in the access control circuit 116 by using the optimal interleave setting corresponding to the channel numbers identified by the firmware 203 (step S10). In an example of FIG. 6, the interleave group number corresponding to the channel number "#5" of the access control circuit 116 is changed from "2" to "1". That is, since the interleave group number corresponding to the channel number "#5" is changed to "1", the interleave setting corresponding to the channel numbers "4" and "5" to which the interleave group number "1" is set is changed from the two 1-way interleave setting to the 2-way interleave setting. Here, the firmware 203 changes the interleave setting corresponding to the channel numbers "4" and "5" from the two 1-way interleave setting to the 2-way interleave setting, so that, in the CPU 101, it seems that the address which accesses the data on the memory has been changed. Therefore, when data is viewed from the OS 201, the firmware 203 and the driver 202, it seems that data stored into the address stored into the memory circuit cluster B115 after the change of the interleave setting is different from the data before the change of the interleave

The data copy control unit 124 in the interleave control circuit 105 copies the data in the memories 114E and 114F corresponding to the channel numbers (i.e., "#4" and "#5") of the interleave setting to be changed in the access control circuit 109 to the memories 121E and 121F corresponding to the channel numbers (i.e., "#4" and "#5") of the changed interleave setting in the access control circuit 116 (step S11). The data which the data copy control unit 124 in the interleave control circuit 105 reads out from the memories 114E and 114F is data in time of stopping of the transaction including the memory access by the OS 201.

The reading/writing control unit 122 in the interleave control circuit 105 cancels prohibiting the access control circuit 116 from accessing in the read-out (Read) direction from the memory circuit cluster B115 (step S12). The firmware 203 and the data copy control unit 124 in the interleave control circuit 105 may judge whether the copy has completed normally at the time of copy completion.

Next, the reading/writing control unit 122 in the interleave control circuit 105 prohibits the access control circuit 109 from accessing in the read-out (Read) direction from the memory circuit cluster A108 (step S13). When the interleave setting in the access control circuit 109 is changed after data has been arranged at the memory cluster 114 in the memory circuit cluster A108, the mismatching occurs between the written-in data and the read-out data. The reading/writing control unit 122 prohibits the access control circuit 109 from reading out the data, so that the reading/writing control unit 122 prevents the access control circuit 109 from using the data which has caused the mismatching.

The interleave control unit 123 in the interleave control circuit 105 changes the interleave setting in the access control circuit 109 by using the optimal interleave setting corresponding to the channel numbers identified by the firmware 203 (step S14). In an example of FIG. 7, the interleave group number corresponding to the channel number "#5" of access control circuit 109 is changed from "2" to "1". That is, since the interleave group number corresponding to the channel number "#"#5" is changed to "1", the interleave setting corresponding to the channel numbers "4" and "5" is changed from the two 1-way interleave setting to the 2-way interleave setting.

The data copy control unit 124 in the interleave control circuit 105 copies the data in the memories 121E and 121F corresponding to the channel numbers (i.e., "#4" and "#5") of the changed interleave setting in the access control circuit 116 to the memories 114E and 114F corresponding to the channel numbers (i.e., "#4" and "#5") of the changed interleave setting in the access control circuit 109 (step S15). The data which the data copy control unit 124 in the interleave control circuit 105 reads out from the memories 12 1 E and 121F is data in time of stopping of the transaction including the memory access by the OS 201.

The reading/writing control unit 122 in the interleave control circuit 105 cancels prohibiting the access control circuit 109 from accessing in the read-out (Read) direction from the memory circuit cluster A108 (step S16). The data copy control unit 124 in the interleave control circuit 105 notifies the firmware 203 that the copy has completed (step S17). Here, the firmware 203 and the data copy control unit 124 in the interleave control circuit 105 may judge whether the copy has completed normally at the time of copy completion.

The firmware 203 resumes the matching check of the read-out data from the memory cluster A114 and the memory cluster B 121 (step S18). The firmware 203 notifies the driver 202 that the changing process of the interleave setting has completed, and the driver 202 requires the OS 201 to resume the transaction including the memory access (step S19). The CPU 101 resumes the transaction including the memory access according to the resumption request of the transaction to the OS201 from the driver 202. That is, the server 100 returns from the sleep mode, and resumes the data process using the memory cluster A114 and the memory cluster B121. Here, the information acquired in each step is stored into the OS 201 and the memory controller 103, and can be acquired from the driver 202 and the firmware 203 accordingly.

In FIGs. 6 to 8, the description has been given of the changing process of the interleave setting when the memories are added. However, even when the memories are reduced, the changing process of the interleave setting in FIGS. 6 to 8 is performed similarly. That is, the changing process of the interleave setting in FIGs. 6 to 8 is performed when the number of memories is changed.

As described above, according to the present embodiment, a part of the interleave settings in the access control circuits 109 and 116 is changed according to the optimal interleave setting, and only the data corresponding to the channels in which the interleave setting is changed is copied. Therefore, the copy time of the data and the stop time of the server 100 for changing the interleave setting can be reduced. Moreover, the data copy is completed in the memory controller 103, and the change of the interleave setting is completed without rebooting the server 100. Therefore, the copy time of the data and the stop time of the server 100 for changing the interleave setting can be reduced.

In addition, the server 100 alternately changes the interleave settings in the redundant memories, so that the server 100 can optimally change the interleave settings without rebooting the server 100. Moreover, even when the memories are increased or decreased, the server 100 can perform the resetting of the interleave in a short time, and can improve a bandwidth of the memory access.

### EXPLANATION OF REFERENCES

100 server, 101 CPU, 102 I/O device, 103 memory controller, 104 control register, 105 interleave control circuit, 107 duplicated control circuit, 108 storage circuit cluster A (Side A), 109 and 116 access control circuit, 114 memory cluster A, 114A to 114E and 121A to 121E memory, 115 storage circuit cluster B (Side B), 121 memory cluster B, 122 reading/writing control unit, 123 interleave control unit, 124 data copy control unit

## Claims

1. A memory control device connected to a first memory cluster that divides data and stores the divided data into a plurality of first memories, and a second memory cluster that divides the data and redundantly stores the divided data into a plurality of second memories, the memory control device **characterized by** comprising:
a first control circuit that has a plurality of channels connected to the plurality of first memories, and accesses the first memory cluster based on a first interleave setting for dividing data, and reading and writing the divided data from/into memories of a number corresponding to the division number of data;
a second control circuit that has a plurality of channels connected to the plurality of second memories, and accesses the second memory cluster based on a second interleave setting for dividing data, and reading and writing the divided data from/into memories of a number corresponding to the division number of data;
a decision means configured to, when the number of memories included in the first memory cluster and the second memory cluster is changed, decide a third interleave setting based on the number of memories after the changing;
an identifying means configured to compare the first and the second interleave settings with the third interleave setting, and identify a channel having a different division number of data;
a changing means configured to change the first and the second interleave settings by using a part of the third interleave setting corresponding to the identified channel; and
a copy means configured to copy data in the memory corresponding to a channel related to the change of the first interleave setting to the memory corresponding to a channel related to the change of the second interleave setting, and copy data in the memory corresponding to a channel related to the change of the second interleave setting to the memory corresponding to a channel related to the change of the first interleave setting.

2. The memory control device as claimed in claim 1, **characterized in that** the decision means sets the division number of data in the third interleave setting to "m" to the n-th power (i.e., "m" and "n" are integers greater than or equal to 0) and a maximum value of a range that does not exceed the number of memories included in the first memory cluster or the second memory cluster.

3. The memory control device as claimed in claim 1 or 2, **characterized in that** each of the first to the third interleave settings includes a channel number for identifying each of the plurality of channels, and a number for identifying whether each channel belongs to a group of continuous data or belongs to a group of different data.

4. The memory control device as claimed in any one of claims 1 to 3, **characterized in that** after the changing means has changed the first interleave settings by using the part of the third interleave setting corresponding to the identified channel, the copy means copies data in the memory corresponding to the channel related to the change of the second interleave setting to the memory corresponding to the channel related to the change of the first interleave setting, and
after the changing means has changed the second interleave settings by using the part of the third interleave setting corresponding to the identified channel, the copy means copies data copied into the memory corresponding to the channel related to the change of the first interleave setting to the memory corresponding to the channel related to the change of the second interleave setting.

5. The memory control device as claimed in any one of claims 1 to 4, **characterized in that** the copy means judges whether the copy has completed normally at the time of copy completion.

6. The memory control device as claimed in any one of claims 1 to 5, **characterized by** further comprising a read-out control means configured to prohibit reading out data from the first memory cluster and the second memory cluster,
wherein before the changing means changes the first interleave settings by using the part of the third interleave setting corresponding to the identified channel, the read-out control means prohibits reading out data from the first memory cluster, and
before the changing means changes the second interleave settings by using the part of the third interleave setting corresponding to the identified channel, the read-out control means prohibits reading out data from the second memory cluster.

7. An information processing device **characterized by** comprising:
a first memory cluster that divides data and stores the divided data into a plurality of first memories;
a second memory cluster that divides the data and redundantly stores the divided data into a plurality of second memories;
a memory control device connected to the first and the second memory clusters; and
an arithmetic processing device that reads and writes data from/into the first and the second memory clusters via the memory control device;
the arithmetic processing device including:
a first control circuit that has a plurality of channels connected to the plurality of first memories, and accesses the first memory cluster based on a first interleave setting for dividing data, and reading and writing the divided data from/into memories of a number corresponding to the division number of data;
a second control circuit that has a plurality of channels connected to the plurality of second memories, and accesses the second memory cluster based on a second interleave setting for dividing data, and reading and writing the divided data from/into memories of a number corresponding to the division number of data;
a decision means configured to, when the number of memories included in the first memory cluster and the second memory cluster is changed, decide a third interleave setting based on the number of memories after the changing;
an identifying means configured to compare the first and the second interleave settings with the third interleave setting, and identify a channel having a different division number of data;
a changing means configured to change the first and the second interleave settings by using a part of the third interleave setting corresponding to the identified channel; and
a copy means configured to copy data in the memory corresponding to a channel related to the change of the first interleave setting to the memory corresponding to a channel related to the change of the second interleave setting, and copy data in the memory corresponding to a channel related to the change of the second interleave setting to the memory corresponding to a channel related to the change of the first interleave setting.

8. A control method for a memory control device connected to a first memory cluster that divides data and stores the divided data into a plurality of first memories, and a second memory cluster that divides the data and redundantly stores the divided data into a plurality of second memories, the control method **characterized by** comprising:
deciding, when the number of memories included in the first memory cluster and the second memory cluster is changed, a third interleave setting for dividing data, and reading and writing the divided data from/into memories of a number corresponding to the division number of data, based on information on the number of memories and data paths;
comparing a first interleave setting in a first control circuit included in the memory control device and a second interleave setting in a second control circuit included in the memory control device with the third interleave setting, and identifying a channel having a different division number of data, from among the plurality of channels included in each of the first control circuit and the second control circuit;
changing the first and the second interleave settings by using a part of the third interleave setting corresponding to the identified channel; and
copying data in the memory corresponding to a channel related to the change of the first interleave setting to the memory corresponding to a channel related to the change of the second interleave setting, and copying data in the memory corresponding to a channel related to the change of the second interleave setting to the memory corresponding to a channel related to the change of the first interleave setting.
